# EUROPEAN PATENT APPLICATION

(11) **EP 4 579 196 A1**
(43) Date of publication of application: **02.07.2025**
(21) Application number: 23220380.2
(22) Date of filing: 27.12.2023
(51) Int. Cl.: G01D 11/24, G01D 4/00

(54) **CONSUMPTION METER FOR EASY DISMANTLING AND RECYCLING**

(71) Applicant: Kamstrup A/S, 8660 Skanderborg (DK)
(72) Inventor: Laursen, Peter Schmidt, 8660 Skanderborg (DK); Nielsen, Ida Gjerlevsen, 8660 Skanderborg (DK); Holmegaard, Lotte, 8660 Skanderborg (DK)
(74) Representative: Plougmann Vingtoft a/s

(57) **Abstract**

A measurement device, such as a consumption meter, which is designed for dismantling with the purpose of recycling. The measurement device has a housing with a first side (FS) and a second side (LD) forming an enclosure in which a stack of elements (E1, E2) are arranged. The stack of elements (E1, E2) comprises a first element (E1) adjacent to the first side (FS) of the housing, an upper second (E2) arranged adjacent to the second side (LD), where at least one of the elements (E1, E2) comprises a circuit board with electronic components configured for measuring a physical quantity, and one or more additional components. The housing has at least one penetration zone (PZ1, PZ2, PZ3) on its first side (FS), so as to allow easy penetration of an associated push member (PM1, PM2, PM3) and to allow said associated push member (PM1, PM2, PM3) to apply a force on the first element (E1) of the stack of elements (E1, E2) which, via the second element (E2), is arranged to apply a force on the second side (LD) of the housing to cause the second side (LD) of the housing to separate from the first side (FS) of the housing and to further allow the stack of elements (E1, E2) to separate from the housing. The penetration zone(s) (PZ1, PZ2, PZ3) is positioned so in relation to a position of a battery inside the housing, so that the associated push member(s) do not contact and/or damage the battery during the dismantling process.

## Description

### FIELD OF THE INVENTION

The present invention relates to measurement devices, such as consumption meters, a method for recycling and a system for automatic dismantling of a measurement device. Especially, the invention relates to measurement devices suited for easy and gentle dismantling for the purpose of separating materials of the measurement device for recycling.

### BACKGROUND OF THE INVENTION

Recycling, and thereby also recycling of electronic devices, has become an increasing subject in recent years. For example, modern consumption or utility meters contain many different components including electronics, batteries, polymeric materials, metals etc.

Today, such meters are apparatus manufactured in a simplified mass production process where possibilities for easy dismantling for recycling purposes has typically been neglected.

Furthermore, due to the intended use at a consumer site, the consumption meter is manufactured to be highly resistant to any intrusion either by water or by tampering. Thus, a hermetically encapsulated consumption meter is not suited for the purpose of easy dismantling for recycling.

Still further, it can be foreseen that legislation will continue to be more and more strict with respect to reuse and recycling of electronic equipment, e.g. measurement devices.

### OBJECT OF THE INVENTION

It is an object of the present invention to provide a measurement device which is suited for easy and gentle dismantling, e.g. for recycling. More specifically, it is an object to provide a measurement device, such as a consumption meter, which is possible to dismantle in an easy way for recycling, and where the components of the device are not damaged in the dismantling process. Preferably, the measurement device is still possible to manufacture in a mass production process.

### SUMMARY OF THE INVENTION

The invention provides in a first aspect a measurement device, such as a consumption meter, comprising:
- a housing comprising a first side and a second side, wherein the housing forms an enclosure between the first side and the second side,
- a stack of elements arranged inside the enclosure of the housing, wherein the stack of elements comprises: a first element arranged adjacent to the first side of the housing, and a second element arranged adjacent to the second side of the housing,
   wherein the stack of elements comprises at least: a circuit board comprising electronic components configured for measuring a physical quantity, and one or more additional components, and
- a battery for powering the electronic components for measuring the physical quantity, wherein the battery is arranged inside the enclosure of the housing,
characterized in that
the housing exhibits at least one dedicated penetration zone on the first side, so as to allow penetration of an associated push member through the at least one penetration zone and to allow said associated push member to apply a force on the first element of the stack of elements which, via the upper element, is arranged to apply a force on the second side of the housing to cause the second side of the housing to separate from the first side of the housing and to further allow the stack of element to separate from the housing, wherein the at least one penetration zone is positioned so on the first side of the housing in relation to a position of the battery, that said associated push member can penetrate the at least one penetration zone and push the stack of elements without damaging the battery inside the enclosure of the housing.

Such measurement device is advantageous since the inventors have realized that providing a stack of elements inside the housing, and providing one or more penetration zones on a lower side of the housing, it makes possible to dismantle the device in an easy, but invasive way, by supporting the housing and at the same time applying a force by a push member on the penetration zone(s) on the first side of the housing in a direction towards the second side of the housing. This force will cause the push member(s) to penetrate the wall of the first side of the housing at the penetration zone(s) which can have a reduced material thickness to reduce the required force to be applied to the push member(s) for the penetration. Such reduced force reduces the risk of damaging the first side of the housing during the penetration.

By continuing to apply a force, the push member(s) will cause the stack of elements to cascade a force through the stack of elements and thereby apply a force on the second side of the housing which will then via one or a plurality of breaking zones cause the second side of the housing to break its connection with the first side of the housing. Hereby, the housing is opened, and the stack of elements inside will fall out and can be easily collected and further processed for material separation.

The penetration zone(s) is positioned so in relation to the position of the battery, that mechanical damage of the battery by the push member(s) can be avoided. It is especially important to not destroy or damage batteries used in metering devices such as heat energy meters or water meters because the batteries are cell batteries and contain acid liquids. Spreading such battery liquid in a disassembly process is harmful and slows down an automated disassembly. Further, it is possible to dismantle the measurement device with a minimal damage to the components due to penetration zone(s) with e.g. reduced thickness or other means to reduce the required force for penetration of the push member(s).

The risk of damage of components can be further reduced by dedicated breaking zones where components of the device are attached to each other, e.g. the attachment between first and second sides of the housing and the attachment of the stack of elements to the housing. Such dedicated breaking zones help to reduce the required push member force, and thus reduces risk of component damage during the dismantling process.

Tests have shown that such as 4-6 push members, e.g. used at dedicated penetration zones, can preferably be spatially distributed on the lower side of the polymeric housing of a measurement device, such as an ultrasonic water meter, and corresponding push members have then been used to apply forces on the penetration zones, and in this way, the fixed mounted upper part of the water meter was then pushed from inside by the stack of elements, and its connection with the lower side of the housing broke, thereby leaving the housing open. By careful distribution of the penetration zones avoiding positions that would cause the push members to impact batteries inside the housing, the separate elements of the stack of elements were only slightly damaged, and could be easily collected for further separation and recycling processes.

Thus, it has been verified that a measurement device, e.g. a consumption meter, can be successfully improved with respect to the ability to be dismantled for recycling purposes. This can be done with minor modifications of the housing on existing consumption meters and other similar measurement devices, since penetration zones can be implemented in various ways without compromising the intended purpose of the housing. Further, breaking zones which are activated upon penetration of the push member(s) can be built into the meter, such as a breaking zone between housing and the stack of elements. Still, it is possible to manufacture the measurement device in a mass production setting, e.g. penetration zones can be implemented in a normal injection molding process of providing the housing.

Compared to rough method of using a saw or a hammer to open the housing of a measurement device which is not produced to be opened non-invasively, it has been found that the measurement device according to the first aspect can be dismantled easily and gently in a very short time in a practical setup using a support structure designed to support the housing, and a push member tool connected to an actuator for applying the force.

After dismantling, such as described above, the housing part(s) in case of a polymeric or composite or glass fiber material, can be reused for other applications, e.g. after being grinded into a granulate. The further elements of the measurement device, e.g. the elements of the stack of elements, can be easily sorted after the dismantling, collected and applied to separate recycling processes.

Thus, such measurement device is highly suited for recycling without requiring many resources for the initial dismantling. Therefore, the measurement device will be prepared for future strict legal regulation of management of recycling of measurement devices, for example consumption meters.

In the following preferred features and embodiments will be described.

Preferably, the at least one penetration zone is arranged to facilitate penetration by an associated push member compared to other places of the first side of the housing, so as to reduce a force by the associated push member for penetration of the first side of the housing.

A penetration zone can be implemented in various ways. In some embodiments, said at least one penetration zone is at least one zone of the first side of the housing having a reduced material thickness compared to other places of the first side of the housing, so as to facilitate penetration of the associated push member. E.g. the material thickness may be reduced to 10-90%, e.g. 10-50%, of the material thickness of the first part of the housing. The penetration zone may also be implemented by having an increased material thickness compared to other parts of the lower side of the housing, or the penetration zone may be implemented as a combination of a zone part with an increased material thickness and an adjacent zone with a reduced material thickness compared to other places of the first side of the housing.

In some embodiments, the at least one penetration zone is at least one zone of the lower side of the housing having a reduced material strength compared to adjacent places of the first side of the housing, so as to facilitate penetration of the associated push member. This may be implemented by providing another polymeric material in the penetration zone, e.g. using a partial injection molding procedure in case of a housing formed by a polymeric material.

The at least one penetration zone may have a size selected to fit the size of an associated push member, which may be in the form of a pin or the like having a thickness of e.g. 1-5 mm. E.g. each penetration zone may cover an area of 0.1-5% of a total area of the first side of the housing.

Preferably, the housing has a plurality of penetration zones, e.g. 2-8, such as 4-6, distributed on its first side, so as to allow penetration of respective associated push members through the plurality of penetration zones to apply a force on respective positions of the first element of the stack of elements. Especially, it may be preferred that the penetration zones are symmetrically arranged on the first side of the housing, so as to provide a symmetric force on the stack of elements by means of the associated push members which may serve to cause less damage to the stack of elements during the dismantling procedure.

The housing may have a guide structure arranged adjacent to the at least one penetration zone, wherein the guide structure serves to guide the associated push member towards contact with the first element of the stack of elements. The guide structure may be a wall on one side or both sides of the penetration zone, e.g. the guide structure may be a ring around the penetration zone.

In some embodiments, the at least one penetration zone is implemented that the at least one penetration zone is indicated by a visual marking such as by means of paint and/or a protrusion and/or an indentation indicating the location of the penetration zone(s). Thereby, the measurement device is prepared for a future dismantling process, since the visual indication serves to indicate the zone(s) where push member(s) are to be applied in a dismantling process. In other implementations, the penetration zone(s) is indicated by an indentation or protrusion on a surface of the first side of the housing.

It may be preferred that the at least one penetration zone has a circular shape, however it may have another shape, if preferred.

In preferred embodiments, the housing has a tubular shape around a central axis, and wherein the stack of elements are stacked inside the housing along a main axis which is parallel with said central axis. This allows an efficient pushing of the stack of elements in the dismantling process, thereby reducing the force required for associated push member(s) to dismantle the device.

The first and second sides of the housing are preferably attached to each other along an attachment line forming a breaking zone for separating the first and second sides of the housing when a force is applied from the stack of elements on an inner side of the second side of the housing. Hereby, the force required for separating the first and second housing sides is reduced, thereby facilitating the dismantling process.

One or more breaking zones may be arranged so as to allow the stack of elements to separate from each other and from the housing with a limited damage on the elements of the stack of elements.

In preferred embodiments, at least one of the elements of the stack of elements is locked in position inside the housing by means of at least one locking element, such as a spring element, arranged for engagement with an interior structure of the housing upon said at least one of the elements of the stack of elements being pushed towards the first side of the housing during mounting inside the housing from a second side of the housing. Preferably, said locking element is arranged to constitute a breaking zone, wherein said locking element is shaped to bend when a force is applied to the stack of elements from the first side of the housing in a direction towards the second side of the housing, thereby causing a release of said locked position inside the housing in order to allow the stack of elements to separate from the housing. Thus, by such locking element being prepared to bend for easy release, the required force for the dismantling process is reduced.

In some embodiments, the housing comprises a flow tube part with a through-going opening. Especially, the flow tube part may be integrated with a container structure forming the first side of the housing, wherein an upper part of the container structure forms an opening, and wherein a cover element, such as a lid, is attached to the upper part of the container structure to form the second side of the housing. Such embodiment is advantageous for a consumption meter comprising a flow meter, e.g. a water meter. Especially, the measurement device is configured for ultrasonic measuring of a flow rate of a fluid through the flow tube part. Especially, the flow tube part and the container structure may form a monolithic element made of a polymeric material or a mineral glass material or a composite material. In a more specific embodiment, the lower element of the stack of element is said circuit board which comprises a processor for controlling operations of the ultrasonic measuring of the flow rate of the fluid and a meter circuit electrically connected to at least one ultrasonic transducer, and a radio circuit configured for generating a radio signal with data indicative of a measured flow rate of the fluid represented therein, and wherein the radio circuit is electrically connected to an antenna element located inside the enclosure of the housing,
- wherein the intermediate element of the stack of elements comprises an insert having a wall and a bottom forming a container for a desiccant,
- wherein the upper element of the stack of elements comprises a transparent element and/or a sealing ring, and
- wherein the upper side of the housing is formed by a closing ring serving to close off the container structure of the housing together with the transparent element and a sealing ring.

In some embodiments, the at least one penetration zone is positioned on a part of the first side of the housing which has a plane surface which is parallel with a plane defined by the second side of the housing. With this configuration, the penetration through the material of the first side of the housing in a direction towards the second side of the housing may be facilitated.

A total area covered by the at least one penetration zone may cover 0.1-10% of a total area of a surface of the first side of the housing. Especially, the first side of the housing may have a lower surface being parallel with a plane defined by an second side of the housing, and wherein a total area covered by the at least one penetration zone may be 0.1-10% of a total area of said lower surface.

In some embodiments, the at least one penetration zone has a circular shape and has a diameter of 1-5 mm, such as 2-4 mm. More specifically, the measurement device comprising 2-10 penetration zones each zone having a circular shape and having a diameter of 1-5 mm, such as 2-4 mm.

In some embodiments, at least one component of: each of the elements of the stack of elements, and the first and second part of the housing comprises an individual indicator or code fixed thereto so as to indicate information relevant for recycling of the at least one component. In this way, further steps of recycling of the measurement device is facilitated after the components of the measurement device has been separate in a first dismantling step. E.g. the individual code or indicator may be a color code or a symbol or a QR code or the like for visually providing an indication of information related to the materials contained in the component, or other information, which can be relevant for the components relating to further steps of recycling.

The measurement device may be a consumption meter, such as one of: a water meter, a gas meter, a heat meter, a cooling meter, an electric meter.

In some embodiments, the circuit board comprises electronic components configured for performing ultrasonic flow measurements, such as comprising one or more ultrasonic transducers.

The measurement circuit may comprise a pressure sensor arranged inside the housing for sensing a fluid pressure.

In a second aspect, the invention provides a method of recycling a measurement device according to the first aspect, the method comprising:
- supporting a part of the housing of the measurement device,
- positioning a push member on the at least one penetration zone on the first side of the housing,
- applying a force to the push member in a direction towards the second side of the housing to cause the push member to penetrate through a material of the at least one penetration zone,
- continuing to apply a force to the push member in a direction towards the second side of the housing to apply a force on the first element of the stack of elements which, via the second element, to apply a force on the second side of the housing to cause the second side of the housing to separate from the first side of the housing and to further allow the stack of elements to separate from the housing,
- collecting the separated first and second sides of the housing, and the stack of elements, and
- applying separate recycling procedures to the first side of the housing, the second side of the housing, and the stack of elements.

Especially, the steps of dismantling may be performed manually, semi-automatically or fully automatically.

In a third aspect, the invention provides a system for automatic or semi-automatic dismantling a measurement device according to the first aspect, the system comprising:
- a push tool comprising at least one push member, such as 2-10 push members,
- an actuator configured to apply a force on the push tool, and
- a control system configured to operate the actuator, so as to allow the at least one push member to apply a force on the at least one penetration zone in a direction towards the second side of the housing to cause the push member to penetrate through a material of the at least one penetration zone, and to continue to apply a force to the at least one push member in a direction towards the second side of the housing to apply a force on the first element of the stack of elements which, via the second element, is arranged to apply a force on the second side of the housing to cause the second side of the housing to separate from the first side of the housing and to further allow the stack of element to separate from the housing.

The system preferably comprises a support structure which is shaped to fit to support the first side of the housing of the measurement device during a dismantling process. Especially, in case of a consumption meter with a housing having a through-going flow tube part, the support structure may be shaped with a through-going opening for receiving the second side of the housing and with surfaces serving to support the protrusions of the through-going flow tube part adjacent to said through-opening.

In a fourth aspect, the invention provides use of the system according to the third aspect for dismantling of the measurement device according to the first aspect.

### BRIEF DESCRIPTION OF THE FIGURES

The various aspects of the invention will now be described in more detail regarding the accompanying figures. The figures show one way of implementing the present invention and is not to be construed as being limiting to other possible embodiments falling within the scope of the attached claim set.
FIG. 1A illustrates an example of a measurement device, namely a 3D view of a consumption meter in an assembled state,
FIG. 1B illustrates an exploded side view of a consumption meter embodiment with a stack of elements with electronics and batteries inside a housing with a lid and a lower housing element with penetration zones on its lower side of the lower housing element,
FIG. 2 and 3 shows two different 3D views of a consumption meter embodiment housing element with six penetration zones.
FIG. 4A shows an exploded 3D view of a consumption meter embodiment having a stack of elements mounted in a lower housing element which is closed off by an upper element in the form of a lid,
FIG. 4B and 4C illustrate the function of a locking element serving as breaking zone between housing and the stack of elements inside the housing,
FIG. 5 illustrates an example of a push tool with six push members arranged for engaging with the breaking zones of the consumption meter embodiment shown in FIG. 1-4 with the purpose of dismantling,
FIG. 6 illustrates examples of elements of a system for dismantling of the consumption meter embodiment of FIG. 1-4, namely including a support structure and the push tool shown in FIG. 5,
FIG. 7 shows a lower 3D view of a consumption meter embodiment mounted in a support structure, where push members have separated the lid and the stack of elements inside from the lower housing element without the push members damaging the batteries,
FIG. 8 shows steps of a method embodiment,
FIG. 9 illustrates a graph indicating a force profile applied to push members during a dismantling process, and
FIG. 10 shows a block diagram of a system embodiment.

### DETAILED DESCRIPTION

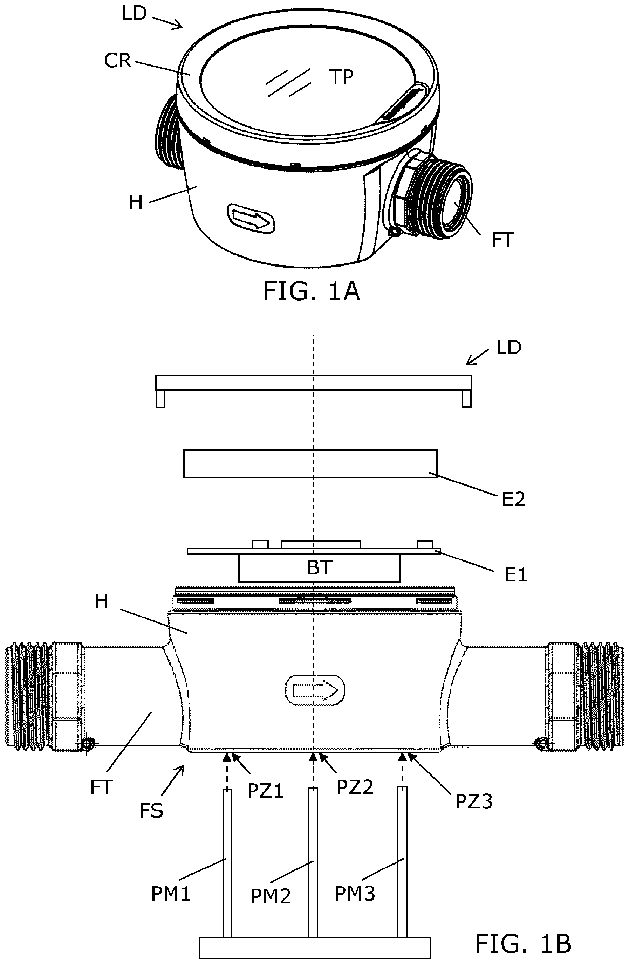

FIG. 1A illustrates a consumption meter or utility meter in the form of a water meter. The consumption meter has a first housing side in the form of a lower housing part H integrated through-going flow tube FT. The lower housing part H forms a cavity which is closed off by a second housing side LD, namely in the form of a lid having a closing ring CR, a transparent panel TP, and a sealing ring (not visible). The closing ring CR is attached to the lower housing part H by a snap clicked or glued or ultrasonically welded attachment thereby forming an enclosure in which electronics for performing the metering functions of the consumption meter powered by a battery are also positioned inside the enclosure.

FIG. 1B illustrates an exploded side view of a consumption meter embodiment with a stack of elements E1, E2 inside a housing element H and with penetration zones PZ1, PZ2, PZ3 on the lower side. The stack of elements E1, E2 is arranged, in an assembled state, inside an enclosure formed between the housing element H which has a tubular shaped container part and the lid which serves to close off the enclosure. The stack of elements E1, E2 are arranged with its main axis parallel with an axis (dashed line) which is a central axis of the tubular shape formed by the container part of the housing element H.

The housing element H is integrated with a flow tube FT with a through-going opening for fluid, e.g. water. The lower element E1 is arranged at a bottom part of the housing element H. The lower element E1 of the stack of elements comprises a circuit board with electronic components configured for measuring flow rate of a fluid flowing through the flow tube FT, further a lower side of the circuit board may comprise one or two ultrasonic transducers for ultrasonic measurements of fluid flow in the flow tube FT. Still further, batteries BT for powering the electronic components are also positioned on the lower element E1.

Further, a push tool is shown with push members PM1, PM2, PM3 arranged for engaging with the respective penetration zones PZ1, PZ2, PZ3 to penetrate the housing element H in a direction indicated by the dashed arrows, i.e. a direction towards the lid and the second side of the housing LD, parallel with the central axis (dashed line) of the tubular shaped container part of the housing element H.

The penetration zones PZ1, PZ2, PZ3 are zones with a reduced strength against application of a force by the push members PM1, PM2, PM3. The penetration zones PZ1, PZ2, PZ3 are positioned distributed on a lower side of the housing element H at selected positions, so that the push members PM1, PM2, PM3 will not hit and damage delicate components inside the housing element H. Especially, two batteries BT are positioned on the lower element E1 of the stack of elements (only one being visible). It is especially important that the penetration zones (PZ1, PZ2, PZ3) are positioned so in relation to position of the batteries BT, that the push members PM1, PM2, PM3 will not hit the batteries BT when entering the enclosure of the housing element H. This is ensured by letting the trajectory of a push member, say PM1, run beside a battery and not through it. In another embodiment, a protection plate be placed under the batteries BT so that the push member will hit and push the protection plate but not damage the batteries BT. Preferably, the penetration zones PZ1, PZ2, PZ3 are further positioned so that the push members PM1, PM2, PM3 will not penetrate the flow tube FT.

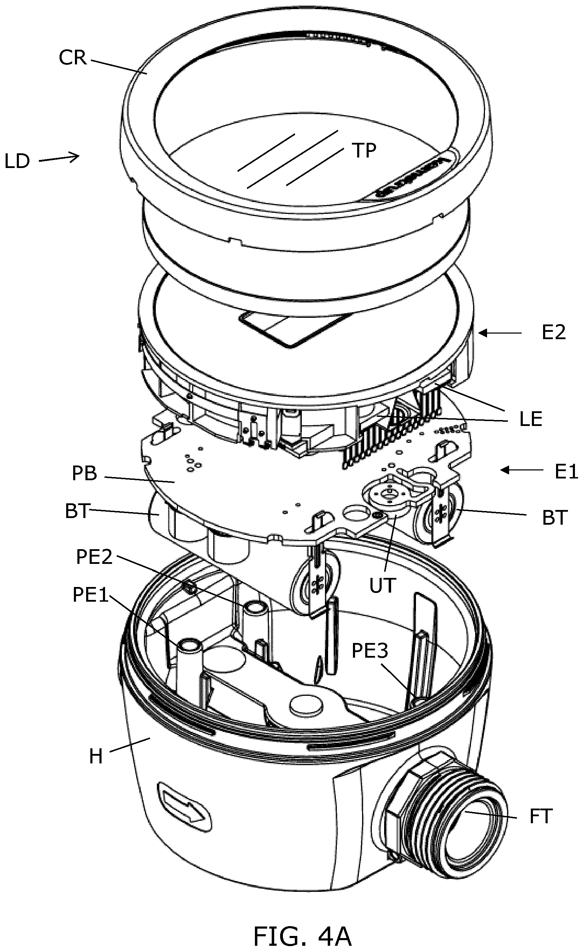

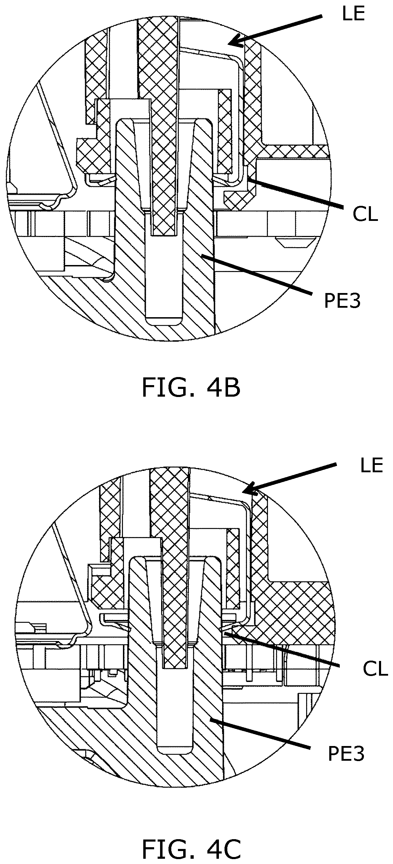

An upper element E2 is arranged between the lower element E1 and the lid, and this intermediate element E2 may comprise an insert with an enclosed cavity containing a desiccant. Further, this element can include a locking element, see locking element LE in FIG. 4A-4C, in the form of claws serving to lock the two elements E1 and E2 in position by engagement with a protrusion, see protrusion PE3 in FIG. 4A-4C, inside the housing element H. Especially, it is preferred that this locking element is designed so as to allow locking onto the housing element H when inserted and forced downwards from the opening of the housing element H, and at the same time the locking element should be designed to allow a release of the locking position, when forced in an upward direction. Thereby, the dismantling process is facilitated. As shown in FIG. 4B and 4C, this may be implemented by claws or barbs CL angled in one direction so as to grip onto the protrusion PE3 of the housing element H when the element E2 is inserted downwards, while the claws or barbs CL are shaped such that, when applied by a force of a certain magnitude in an upward direction, the claws or barbs CL will bend and thereby release the grip.

It is to be understood that the stack of elements E1, E2 may comprise one or more intermediate elements arranged to cascade a push force from the push member(s) to the first and second elements E1, E2 in the dismantling process.

In a dismantling process, when the push members PM1, PM2, PM3 have penetrated the penetration zones PZ1, PZ2, PZ3, the push member PM1, PM2, PM3 are further forced upwards, and thereby the push members PM1, PM2, PM3 will force the lower element E1 against the upper element E2, which in turn will apply a force on the lid to cause the lid to break away from the housing element H and to further push the stack of elements E1, E2 away from the housing element H.

In this way, a simple and fast dismantling procedure can be provided, and the penetration zones PZ1, PZ2, PZ3 serve to facilitate the process and reduces the necessary force to penetrate the housing H even in case the housing element H is made of a high strength material, for example the polymeric or mineral glass or composite material housing of a consumption meter. A low penetration force reduces the risk of damaging the housing element H during the dismantling process, and thereby the quality of the separated components and the dismantling is improved.

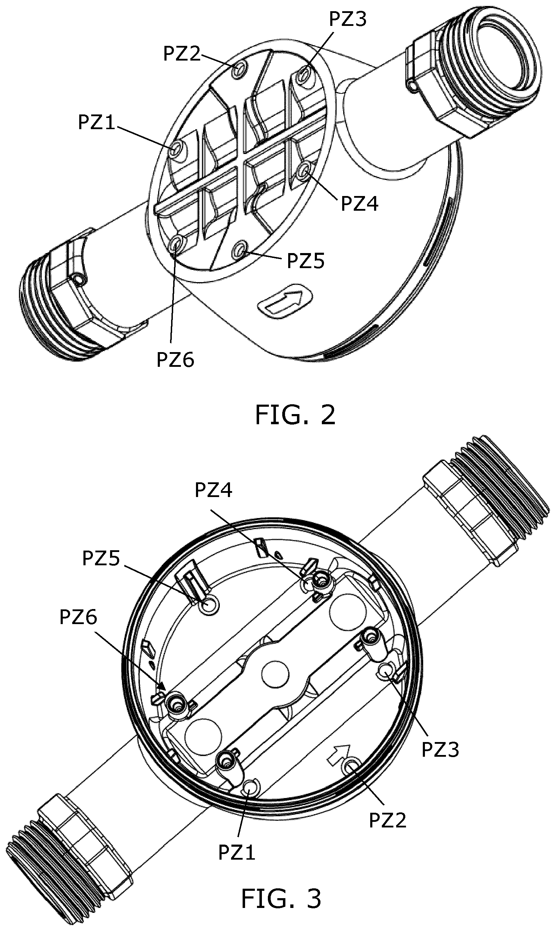

FIG. 2 and 3 shows two different 3D views of a consumption meter embodiment having a housing element and with six penetration zones PZ1-PZ6. As seen, the penetration zones PZ1-PZ6 are circular zones have a diameter of such as 1-5 mm, e.g. 2-4 mm. The circular zones are encircled by a protruding ring - both on the lower surface of the housing element and on the inside. These protruding rings serve as a visual indication as well as a guide for push tools in a dismantling process.

As seen, the penetration zones PZ1-PZ6 are symmetrically positioned on sides of the lower part of the housing element so that the centrally arranged flow tube is not penetrated during insertion of the push tools trough the penetration zones PZ1-PZ6.

FIG. 4A shows an exploded view of an example of a consumption meter having a stack of elements mounted in a lower housing element H which is closed off by an upper element in the form of a lid on the second side LD. FIG. 4 serves to show a specific example of an embodiment with more details of the stack of elements, even though penetration zones on the bottom surface of the housing element H are not visible in FIG. 4.

The flow meter has a flow tube FT with a through-going passage of fluid, e.g. water, between an inlet and an outlet. The housing element H is formed as an integrated part of the flow tube FT thereby providing a compartment for meter components arranged at the flow tube FT to measure the flow rate of a fluid flowing in the fluid passage. The housing H and flow tube FT may be formed by a polymer material or a composite material or a mineral glass material.

Inside an enclosure formed by the housing element H a stack of elements E1, E2 are arranged. The stack of elements E1, E2 are arranged so that they are preferably all parallel or substantially parallel with a plane formed by the upper cover element, a lid which has a closing ring CR and a transparent panel TP and is in sealed connection to the housing element H by a (not visible) sealing ring. In the manufacturing process, this stack of elements E1, E2 are mounted from the open upper side of the housing element H which is then subsequently closed off by the lid which can be click or snap locked or glued, welded or screwed, and/or hermetically sealed to the upper part of the housing element H to close off the housing element H.

With this arrangement with a stack of elements E1, E2, it has been found possible to effectively force or push the stack of elements E1, E2 from the bottom part of the housing element H in a direction towards the lid, i.e. on the second side LD and thus via the lower element E1 and the upper element E2 to cause the lid to break its connection to the housing element H and thereby separate from the housing element H and cause the housing to be open, thereby allowing the stack of elements E1, E2 to also separate from the housing element H.

In the following, examples of specific features for the elements E1, E2 will be described.

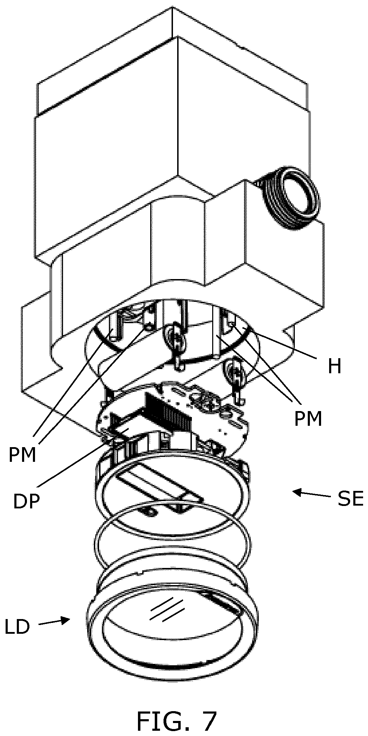

The lower element E1 in the stack of elements E1, E2 is a printed circuit board PB including a processor and meter circuit for controlling operations of the ultrasonic flow meter. The circuit board PB further includes two ultrasonic transducers, of which one UT, is visible mounted on a lower side of the circuit board PB. Two batteries BT are also mounted on the lower side of the circuit board PB for powering flow meter operations including the processor. A lower side of the ultrasonic transducers UT opposite an upper side connected to the circuit board PB, is arranged against an outer surface of the flow tube FT, inside the housing element H. On an upper side of the circuit board PB a display DP is mounted (see FIG. 7). The display DP is configured for displaying a measured flow rate and other fluid related data. In preferred embodiments, the flow meter further includes a radio circuit mounted on the circuit board PB. The radio circuit and antenna element are preferably suited for automated meter reading (AMR). Advanced meter infrastructure (AMI) systems are commonly known for communicating with utility meters. The AMI may use any suitable wireless technology (e.g. wireless M-Bus, Narrowband IoT, SigFox, any cellular technologies or proprietary communication protocols) or any wired communication technologies (e.g. wired M-Bus, LON, Ethernet).

On top of the lower element E1, a top part E2 forms an insert with a cavity arranged to contain a desiccant. The insert E2 further serves to fix the insert E2 itself as well as the circuit board PB, E1 to the housing element H, namely by means of a metallic element with claws serving to grab onto protrusions PE1, PE2, PE3 of the housing element H, when the insert E2 is forced towards the bottom of the housing element H. As already explained, these claws are preferably shaped to bend, when the stack of elements are pushed upwards towards the lid, and thus the claws will release its grip locking onto the housing element H during a dismantling process, thereby facilitating the dismantling.

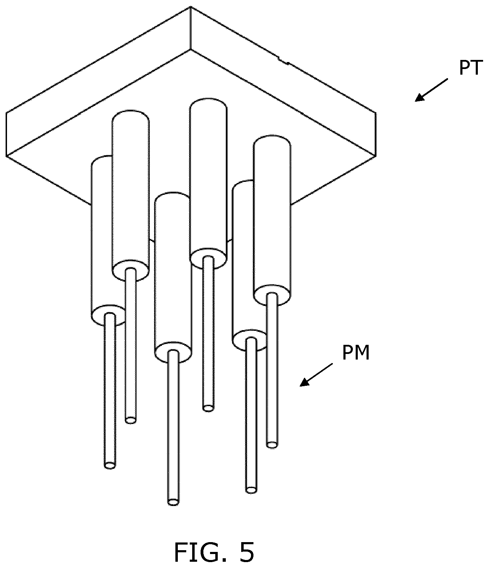

FIG. 5 illustrates an example of a push tool with six push members arranged for engaging with the penetration zones of the consumption meter embodiment shown in FIG. 1-4 with the purpose of dismantling,

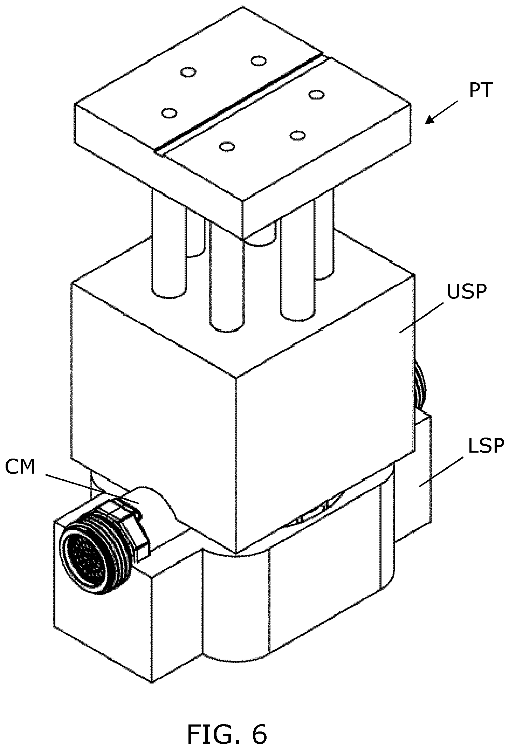

FIG. 6 illustrates a 3D view of examples of elements of a system for dismantling a consumption meter CM similar to the one in FIG. 1-4. The consumption meter CM is mounted between a lower and an upper support structure LSP, USP and with the push tool PT from FIG. 5 inserted through the upper support structure USP to penetrate the consumption meter CM for dismantling the consumption meter CM. The support structures LSP, USP are shaped to fit the shape of the housing of the consumption meter CM. Especially the lower support structure LSP serves to support the flow tube part during the dismantling procedure, and a through-going opening in the lower support structure LSP allows the elements inside the housing to leave the housing after being pushed by the push members of the push tool PT. The support structure LSP is preferably made in metal such as aluminium or cast iron in order to be able to withstand the radial forces generated from the housing element and the push member(s) during the penetration process.

FIG. 7 shows a lower 3D of the same setup as in FIG. 6, here it is visible that the push members PM have forced the housing element H and the lid LD to separate, and thus the push members PM have pushed the stack of elements SE inside the housing element H to separate from the housing element H, e.g. by gravity, thus leaving these elements ready for collection for further processing in respective recycling processes.

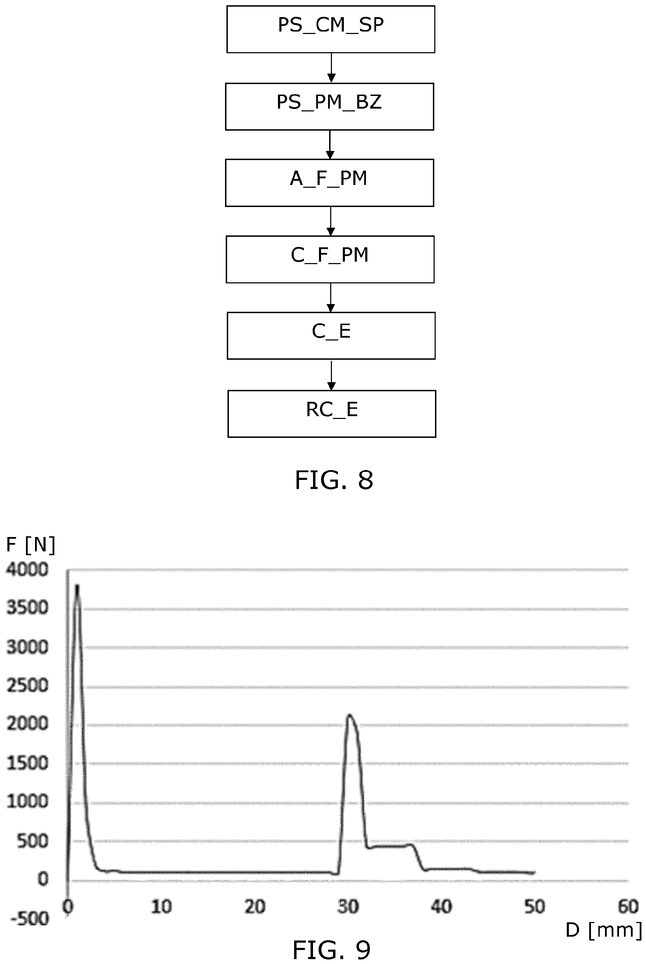

FIG. 8 shows steps of an embodiment of a method of recycling a measurement device according to the first aspect, such as a consumption meter. The method comprises mechanically supporting PS_CM_SP a part of the housing of the measurement device, preferably supporting a lower element of the housing, and next positioning PS_PM_BZ a push member on the at least one penetration zone on the first side of the housing, preferably using a push tool with a plurality of push members. Then, applying A_F_PM a force to the push member(s) in a direction towards the second side of the housing to cause the push member(s) to penetrate through a material of the at least one penetration zone. Further, continuing C_F_PM to apply a force to the push member(s) in a direction towards the second side of the housing to apply a force on the first element of the stack of elements which, via the second element, is arranged to apply a force on the second side of the housing to cause the second side of the housing to separate from the first side of the housing and to further allow the stack of element to separate from the housing. The elements inside the housing as well as the second side of the housing may fall by gravity through an opening in the support structure used to support the measurement device. The elements may be captured e.g. on a conveyor and then in the next step collecting C_E the housing elements and the stack of elements, and further applying RC_E separate recycling procedures to the housing elements, such as first side of the housing, the second side of the housing, and the stack of elements.

FIG. 9 shows a curve illustrating the mechanical force F applied to push members versus distance D during a process of dismantling the above-described consumption meter, where the distance D zero is when the push members enter into contact with the wall of the consumption meter.

When the push members are moved towards the wall of the consumption meter, a force peak is seen, when the push members penetrate through the wall, and a force F of 3870 N is measured as a peak force in the present example. After the push members have penetrated the wall, the force F drops to almost zero, and the force F increases again up to 2100 N at about a distance D of 30 mm corresponding to the push members reaching the stack of elements inside the housing of the consumption meter and. At this point, the stack of elements is pressed against the lid LD, and the locking mechanism(s) for the stack of elements are broken along with the lid LD being pushed open, and the force F drops to 475 N. At a distance D of about 38 mm the stack of elements will fall out of the housing, and the force drops to about zero, and the dismantling processes has been completed.

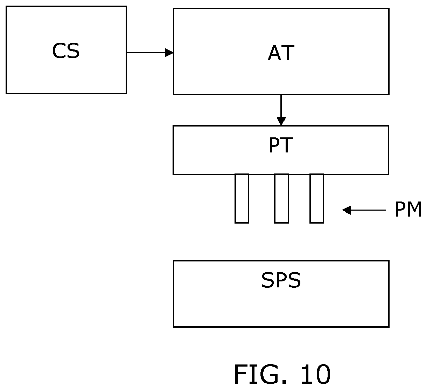

FIG. 10 illustrates a block diagram of elements of a system embodiment for performing a dismantling of a measurement device, e.g. as exemplified in the first steps of FIG. 8, in an automated or semi-automated version. The system comprises a push tool PT comprising at least one push member PM, such as 2-10 push members, preferably parallel rods or pins with tapered or plane tips. The system further comprises an actuator AT configured to apply a force on the push tool PT, and a control system CS configured to operate the actuator AT, so as to allow performing the method according to the first aspect on an associated measurement device, e.g. a consumption meter. The actuator may be a linear electric actuator, a pneumatic or hydraulic actuator or the like. The control system CS may be programmed to cause the actuator AT to gradually move the push tool in a linear movement towards engagement with the housing element of the measurement device and to stop progressing the movement of the push tool when a stop criterion has been met, e.g. by a manual stop or when it has been detected that the stack of elements have been separate from the housing element, e.g. using a camera or the like.

The system preferably also comprises a support structure SPS for supporting or fixing the housing of the associated measurement device during the dismantling procedure.

To sum up, the invention provides a measurement device, such as a consumption meter, which is designed for dismantling with the purpose of recycling. The measurement device has a housing with a first side (FS) and a second side (LD) forming an enclosure in which a stack of elements (E1, E2) are arranged. The stack of elements (E1, E2) comprises a first element (E1) adjacent to the first side (FS) of the housing, an upper second (E2) arranged adjacent to the second side (LD), where at least one of the elements (E1, E2) comprises a circuit board with electronic components configured for measuring a physical quantity, and one or more additional components. The housing has at least one penetration zone (PZ1, PZ2, PZ3) on its first side (FS), so as to allow easy penetration of an associated push member (PM1, PM2, PM3) and to allow said associated push member (PM1, PM2, PM3) to apply a force on the first element (E1) of the stack of elements (E1, E2) which, via the second element (E2), is arranged to apply a force on the second side (LD) of the housing to cause the second side (LD) of the housing to separate from the first side (FS) of the housing and to further allow the stack of elements (E1, E2) to separate from the housing. The penetration zone(s) (PZ1, PZ2, PZ3) is positioned so in relation to a position of a battery inside the housing, so that the associated push member(s) do not contact and/or damage the battery during the dismantling process.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

## Claims

1. A measurement device comprising
- a housing (H) comprising a first side (FS) and a second side (LD), wherein the housing forms an enclosure between the first side (FS) and the second side (LD),
- a stack of elements (E1, E2) arranged inside the enclosure of the housing, wherein the stack of elements (E1, E2) comprises:
- a first element (E1) arranged adjacent to the first side (FS) of the housing,
- a second element (E2) arranged adjacent to the second side (LD) of the housing,
wherein the stack of elements (E1, E2) comprises at least: a circuit board comprising electronic components configured for measuring a physical quantity, and one or more additional components, and
- a battery (BT) for powering the electronic components for measuring the physical quantity,
wherein the battery is arranged inside the enclosure of the housing,
**characterized in that**
the housing exhibits at least one dedicated penetration zone (PZ1, PZ2, PZ3) on the first side (FS), so as to allow penetration of an associated push member (PM1, PM2, PM3) through the at least one penetration zone (PZ1, PZ2, PZ3) and to allow said associated push member (PM1, PM2, PM3) to apply a force on the first element (E1) of the stack of elements (E1, E2) which, via the upper element (E2), is arranged to apply a force on the second side (LD) of the housing to cause the second side (LD) of the housing to separate from the first side (FS) of the housing and to further allow the stack of element (E1, E2) to separate from the housing, wherein the at least one penetration zone (PZ1, PZ2, PZ3) is positioned so on the first side (FS) of the housing in relation to a position of the battery, that said associated push member (PM1, PM2, PM3) can penetrate the at least one penetration zone (PZ1, PZ2, PZ3) and push the stack of elements (E1, E2) without damaging the battery (BT) inside the enclosure of the housing.

2. The measurement device according to claim 1, wherein said at least one penetration zone (PZ1, PZ2, PZ3) is placed at a position to facilitate penetration by an associated push member compared to other places of the first side (FS) of the housing, so as to reduce the force by the associated push member (PM1, PM2, PM3) for penetration of the first side (FS) of the housing.

3. The measurement device according to claim 1 or 2, wherein a wall of the first side (FS) of the housing has a reduced material thickness in the at least one penetration zone (PZ1, PZ2, PZ3) compared to adjacent places of the first side (FS) of the housing.

4. The measurement device according to any of the preceding claims, wherein the first housing side (FS) has a plurality of penetration zones (PZ1, PZ2, PZ3) distributed, so as to allow penetration of respective associated push members (PM1, PM2, PM3) through the plurality of penetration zones (PZ1, PZ2, PZ3) to apply the force on respective positions of the first element (E1) of the stack of elements (E1, E2).

5. The measurement device according to any of the preceding claims, wherein the housing has a guide structure arranged adjacent to the at least one penetration zone (PZ1, PZ2, PZ3), wherein the guide structure serves to guide the associated push member (PZ1, PZ2, PZ3) towards contact with the first element (E1) of the stack of elements (E1, E2).

6. The measurement device according to any of the preceding claims, wherein the at least one penetration zone (PZ1, PZ2, PZ3) is indicated by a visible marking on a surface of the first side (FS) of the housing.

7. The measurement device according to any of the preceding claims, wherein the at least one penetration zone (PZ1, PZ2, PZ3) is indicated by a protrusion or indentation of a surface of the first side (FS) of the housing.

8. The measurement device according to any of the preceding claims, wherein the stack of elements (E1, E2) is arranged for cascading a force from a push member (PM1, PM2, PM3) through the stack of elements (E1, E2).

9. The measurement device according to claim 1, wherein the first and second sides (FS, LD) of the housing are attached to each other along an attachment line forming a breaking zone for separating the first and second sides (FS, LD) of the housing when a force is applied from the stack of elements (E1, E2) on an inner side of the second side (LD) of the housing.

10. The measurement device according to claim 1 or 2, wherein one or more breaking zones (CL) are arranged so as to allow the stack of elements (E1, E2) to separate from each other and from the housing with a limited damage on the elements of the stack of elements (E1, E2).

11. The measurement device according to any of the preceding claims, wherein at least one of the elements (E2) of the stack of elements is locked in position inside the housing by means of at least one locking element (LE), such as a spring element, arranged for engagement with an interior structure (PE3) of the housing upon said at least one of the elements of the stack of elements (E1, E2) being pushed towards the first side (FS) of the housing (H) during mounting inside the housing from a second side of the housing, wherein said locking element (LE) is arranged to constitute a breaking zone (CL), wherein said locking element (LE) is shaped to bend when a force is applied to the stack of elements (E1, E2) from the first side (FS) of the housing (H) in a direction towards the second side of the housing (LD), thereby causing a release of said locked position inside the housing in order to allow the stack of elements (E1, E2) to separate from the housing (H).

12. The measurement device according to any of the preceding claims, wherein the first housing part (H) comprises a flow tube part (FT) with a through-going opening, wherein the flow tube (FT) part is integrated with a container structure forming the lower side of the first housing part (H), wherein an upper part of the container structure forms an opening, and wherein the second housing part (LD) is attached to the upper part of the container structure to form an upper side of the housing.

13. The measurement device according to any of the preceding claims, wherein the housing has a tubular shape around a central axis, and wherein the stack of elements (E1, E2) are stacked inside the housing along a main axis which is parallel with said central axis.

14. The measurement device according to any of the preceding claims, wherein the measurement device is a consumption meter, such as one of: a water meter, a gas meter, a heat meter, a cooling meter, an electric meter.

15. The measurement device according to any of the preceding claims, wherein at least one component of: each of the elements of the stack of elements (E1, E2), the first side (FS) of the housing, and the second side (LD) of the housing, comprises an individual indicator or code fixed thereto so as to indicate information relevant for recycling of the at least one component.

16. A method of recycling a measurement device according to any of claims 1-15, the method comprising:
- supporting (PS_CM_SP) a part of the housing of the measurement device,
- positioning (PS_PM_BZ) a push member on the at least one penetration zone on the first side (FS) of the housing,
- applying (A_F_PM) a force to the push member in a direction towards the second side of the housing to cause the push member to penetrate through a material of the at least one penetration zone,
- continuing (C_F_PM) to apply a force to the push member in a direction towards the second side of the housing to apply a force on the first element of the stack of elements which, via the second element applies a force on the second side (LD) of the housing to cause the second side of the housing to separate from the first side of the housing and to further allow the stack of element to separate from the housing,
- collecting (C_E) the first side of the housing, the second side of the housing, and the stack of elements, and
- applying (RC_E) separate recycling procedures to the first side of the housing, the second side of the housing, and the stack of elements.

17. A system for automatic or semi-automatic dismantling a measurement device according to any of claims 1-15, the system comprising:
- a push tool (PT) comprising at least one push member (PM), such as 2-10 push members,
- an actuator (AT) configured to apply a force on the push tool (PT), and
- a control system (CS) configured to operate the actuator (AT), so as to allow the at least one push member (PM) to apply a force on the at least one penetration zone in a direction towards the second side (LD) of the housing to cause the push member (PM) to penetrate through a material of the at least one penetration zone, and to continue to apply a force to the at least one push member (PM) in a direction towards the second side of the housing to apply a force on the first element of the stack of elements which, via the second element, is arranged to apply a force on the second side of the housing to cause the second side of the housing to separate from the first side of the housing and to further allow the stack of elements (E1, E2) to separate from the housing.
